# EUROPEAN PATENT APPLICATION

(11) **EP 4 848 754 A1**
(43) Date of publication of application: **02.12.2026**
(21) Application number: 26172947.9
(22) Date of filing: 17.04.2026
(51) Int. Cl.: H04R 1/10, H04R 1/02, G02B 27/01

(54) **HEAD MOUNTED DEVICE AND WORKING STATUS DETECTION METHOD THEREOF**

(30) Priority: 28.05.2025 US 202563812874 P; 04.03.2026 US 202619555910
(71) Applicant: HTC Corporation, Taoyuan City 330, (TW)
(72) Inventor: LI, Hou-Chin, 330 Taoyuan City (TW); CHUNG, Yueh-Ting, 330 Taoyuan City (TW); QIU, Jun-Wei, 330 Taoyuan City (TW)
(74) Representative: Wagner & Geyer

(57) **Abstract**

A head mounted device (HMD) and a working status detection method thereof are provided. The HMD includes a main body part, a first supporting part, a second supporting part, a first speaker, a first sound receiver, a second speaker, a second sound receiver, and a controller. The first speaker and the second speaker respectively transmit a first sound signal and a second sound signal. The first sound receiver and the second sound receiver respectively receive the first sound signal and the second sound signal. The controller generates first detection information and second detection information according to the first sound signal and the second sound signal respectively received by the first sound receiver and the second sound receiver, and obtains a working status of the HMD according to the first detection information and the second detection information.

## Description

### CROSS-REFERENCE TO RELATED APPLICATION

This application claims the priority benefit of U.S. provisional application serial no. 63/812,874, filed on May 28, 2025. The entirety of the above-mentioned patent application is hereby incorporated by reference herein and made a part of this specification.

### BACKGROUND

### Technical Field

The disclosure relates to a head mounted device and a working status detection method thereof, and particularly relates to a head mounted device and a working status detection method thereof that may reduce product cost.

### Description of Related Art

Current head mounted device products (e.g., smart glasses and virtual reality glasses) commonly use Hall sensors to detect the status of temple arms, such as a stacked status when fully folded, a partially folded status, and a status during use.

Through the method of setting Hall sensors, the volume required for the head mounted device may be significantly increased. Such a situation may cause an increase in the cost of the head mounted device. Moreover, an oversized head mounted device may not only cause inconvenience in use, but also reduce the competitiveness of the product.

### SUMMARY

The disclosure provides a head mounted device and a working status detection method thereof, which may effectively reduce the volume required for the head mounted device.

A head mounted device of the disclosure includes a main body part, a first supporting part, a second supporting part, a first speaker, a first sound receiver, a second speaker, a second sound receiver, and a controller. The first supporting part and the second supporting part are respectively disposed on two opposite sides of the main body part. The first speaker and the first sound receiver are disposed on the first supporting part. The second speaker and the second sound receiver are disposed on the second supporting part. The first speaker and the second speaker respectively transmit a first sound signal and a second sound signal. The first sound receiver and the second sound receiver respectively receive the first sound signal and the second sound signal. The controller generates first detection information and second detection information according to the first sound signal and the second sound signal respectively received by the first sound receiver and the second sound receiver, and obtains a working status of the head mounted device according to the first detection information and the second detection information.

A working status detection method of the disclosure includes the following. A first supporting part and a second supporting part are disposed on two opposite sides of a main body part of a head mounted device. A first speaker and a first sound receiver are disposed on the first supporting part. A second speaker and a second sound receiver are disposed on the second supporting part. The first speaker and the second speaker are enabled to respectively transmit a first sound signal and a second sound signal. The first sound receiver and the second sound receiver are enabled to respectively receive the first sound signal and the second sound signal. First detection information and second detection information are generated according to the first sound signal and the second sound signal respectively received by the first sound receiver and the second sound receiver, and a working status of the head mounted device is obtained according to the first detection information and the second detection information.

Based on the above, the head mounted device of the disclosure transmits and receives sound signals through the speaker and sound receiver disposed on the supporting part, and thereby obtains the delay time of the received sound signal and the intensity of the sound signal. Furthermore, the head mounted device may determine the working status of the head mounted device according to the delay time of the sound signal and the intensity of the sound signal. In this way, the head mounted device does not need to additionally set a sensor specifically for detecting the supporting part position, which may reduce the volume requirement of the head mounted device to lower the production cost.

### BRIEF DESCRIPTION OF THE DRAWINGS

FIG. 1 is a schematic diagram of a head mounted device according to an embodiment of the disclosure.
FIG. 2A to 2F are schematic diagrams of various different working statuses of the head mounted device.
FIG. 3 is a working status detection method of a head mounted device according to an embodiment of the disclosure.
FIG. 4 is a working status detection method of a head mounted device according to an embodiment of the disclosure.

### DESCRIPTION OF THE EMBODIMENTS

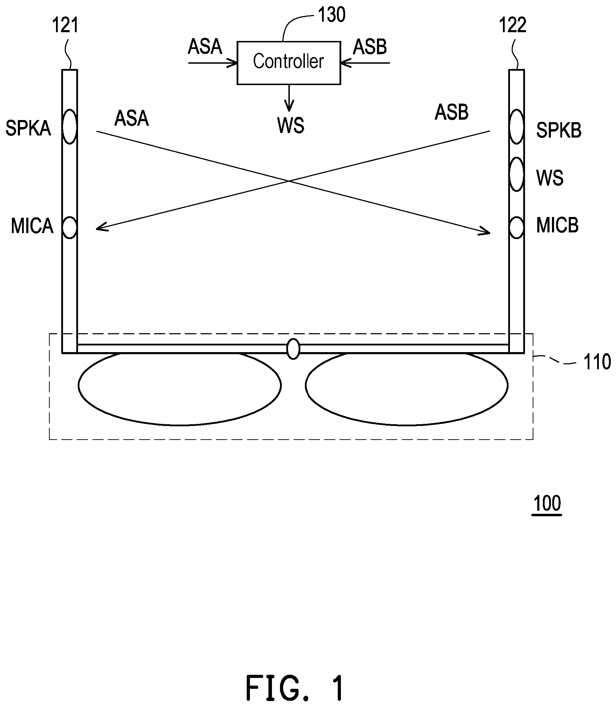

Referring to FIG. 1, FIG. 1 is a schematic diagram of a head mounted device according to an embodiment of the disclosure. A head mounted device 100 may be a head mounted display device, such as virtual reality glasses, augmented reality glasses or mixed reality glasses, or may also be any head mounted device without display function. The head mounted device 100 includes a main body part 110, supporting parts 121, 122 and a controller 130. The supporting parts 121, 122 may be respectively disposed on two opposite sides of the main body part 110. The head mounted device 100 may further include speakers SPKA, SPKB, sound receivers MICA, MICB, and a wearable sensor WS. The speaker SPKA and the sound receiver MICA may be disposed on the supporting part 121. The speaker SPKB and the sound receiver MICB may be disposed on the supporting part 122. In this embodiment, the wearable sensor WS may be configured on the supporting part 122. In other embodiments of the disclosure, the wearable sensor WS may also be configured on the supporting part 121, or different wearable sensors WS may be respectively disposed on the supporting parts 121, 122.

The controller 130 may be electrically coupled to the speakers SPKA, SPKB, the sound receivers MICA, MICB, and the wearable sensor WS for controlling the speakers SPKA, SPKB, the sound receivers MICA, MICB, and the wearable sensor WS and receiving the signals generated therefrom. In the embodiment of the disclosure, the controller 130 may be disposed in the body. The controller 130 may be a processor with computing capability. Alternatively, the controller 130 may be a hardware circuit designed through Hardware Description Language (HDL) or any other digital circuit design method well known by those skilled in the art, and implemented through a Field Programmable Gate Array (FPGA), a Complex Programmable Logic Device (CPLD), or an Application-specific Integrated Circuit (ASIC).

In the embodiment of the disclosure, the head mounted device 100 may perform a detection of the working status of the head mounted device 100 through the speakers SPKA, SPKB and the sound receivers MICA, MICB. In some embodiments of the disclosure, the head mounted device 100 may perform a detection of the working status of the head mounted device 100 through the speakers SPKA, SPKB and the sound receivers MICA, MICB, along with the wearable sensor WS.

In detail, in the detection of the working status of the head mounted device 100, the controller 130 may enable the speaker SPKA to transmit a sound signal ASA, and enable the sound receiver MICB to perform a reception of the sound signal ASA. In addition, the controller 130 may enable the speaker SPKB to transmit a sound signal ASB, and enable the sound receiver MICA to perform a reception of the sound signal ASB.

Furthermore, the controller 130 may generate first detection information and second detection information according to the sound signal ASA and the sound signal ASB respectively received by the sound receiver MICA and the sound receiver MICB, and obtain the working status of the head mounted device 100 according to the first detection information and the second detection information. In this embodiment, the first detection information may be the receive delay of the sound signal ASA between the speaker SPKA and the sound receiver MICB, and the second detection information may be the receive delay of the sound signal ASB between the speaker SPKB and the sound receiver MICA. In addition, the first detection information may further include the intensity of the sound signal ASA received by the sound receiver MICB, and the second detection information may further include the intensity of the sound signal ASB received by the sound receiver MICA.

In this embodiment, the sound receivers MICA, MICB may be any form of microphone, and the speakers SPKA and SPKB may be any form of loudspeaker.

In this embodiment, the sound signals ASA, ASB may be composed of frequencies inaudible to the human ear, having one or more different ultrasonic frequencies. In the detection of the working status, the controller 130 may control the speakers SPKA and SPKB to separately perform playback operations of the sound signals ASA, ASB at different times. The frequencies of the sound signals ASA, ASB are, for example, 20Khz and 19Khz, but not limited thereto.

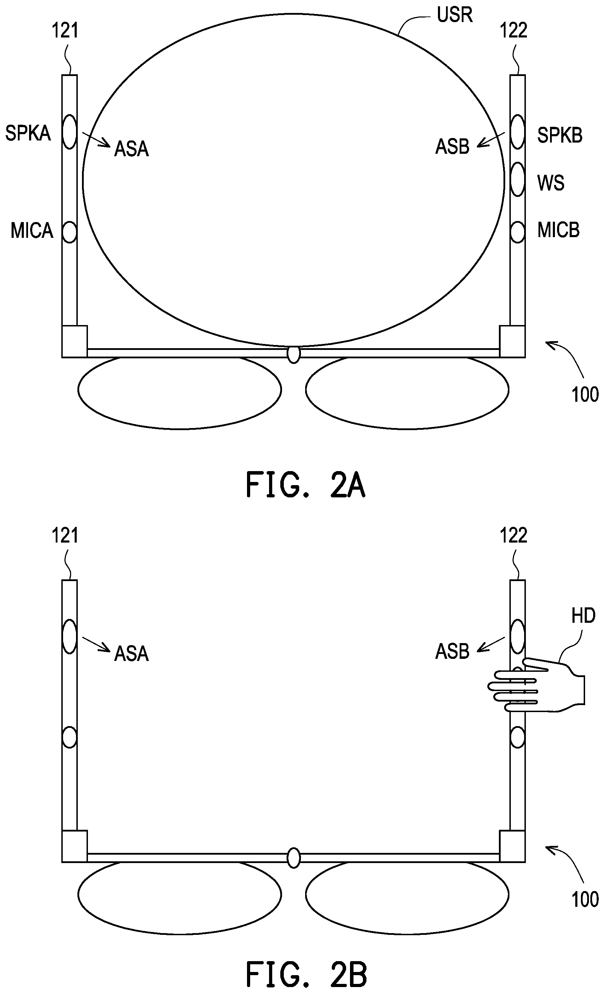

Regarding various aspects of the working status of the head mounted device 100 according to embodiments of the disclosure, reference may be made to the following schematic diagrams of various different working statuses of the head mounted device illustrated in FIG. 2A to FIG. 2F. In FIG. 2A, the head mounted device 100 is worn on the head of a user USR and is in a normal use status. The transmission paths of the sound signals ASA, ASB between the speakers SPKA, SPKB and the sound receivers MICB, MICA, as well as the wearable sensor WS, are all blocked by the head of the user USR. Therefore, the receive delay of the sound signals ASA, ASB will be significantly increased, the intensity of the sound signals ASA, ASB respectively received by the sound receivers MICB, MICA will be significantly decreased, and the wearable sensor WS may sense that the head mounted device 100 is in a worn status.

In FIG. 2B, the head mounted device 100 is held by the user USR and is in a handheld status, and the user's hand HD may cover the wearable sensor WS such that the head mounted device 100 is sensed to be in a worn status. In such a situation, as compared with FIG. 2A, the sound receivers MICB, MICA may respectively receive sound signals ASA, ASB with relatively high intensity. Since the head mounted device 100 is in a handheld status, the controller may cause the head mounted device 100 to enter a low power state.

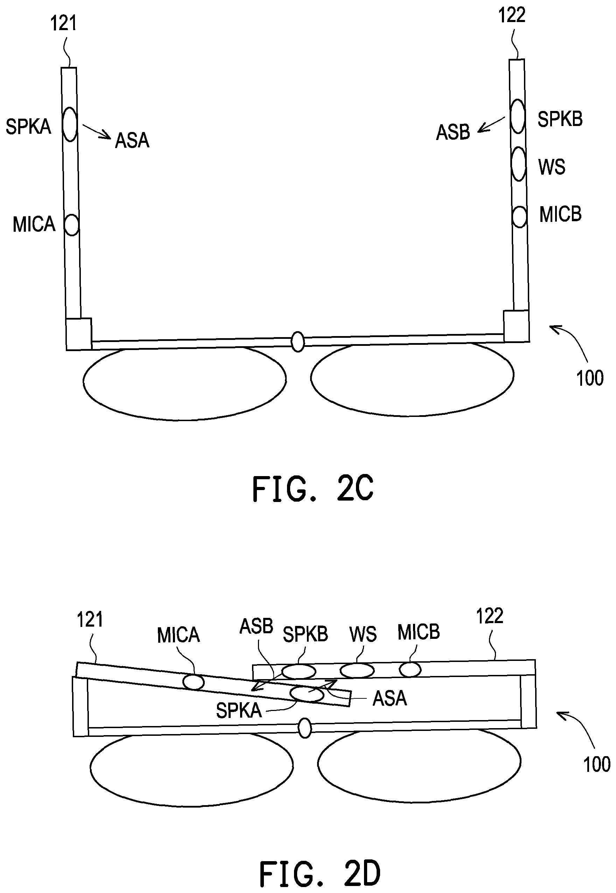

In FIG. 2C, the head mounted device 100 is not worn by the user USR, and the supporting parts 121, 122 are in a fully open status. At this time, there are unobstructed transmission paths for the sound signals ASA, ASB between the speakers SPKA, SPKB and the sound receivers MICB, MICA, and the lengths of the transmission paths are substantially the same. In such a status, the receive delays of the sound signals ASA, ASB may be substantially the same. The controller may determine whether the receive delays of the sound signals ASA, ASB are substantially the same by calculating whether the absolute value of the difference between the receive delays of the sound signals ASA, ASB is less than a preset threshold. On the other hand, based on the unobstructed transmission paths for the sound signals ASA, ASB between the speakers SPKA, SPKB and the sound receivers MICB, MICA, the sound signals ASA, ASB received at the sound receivers MICB, MICA may also have relatively high intensity. Moreover, the wearable sensor WS may sense that the head mounted device 100 is in a not-worn status. Based on an evaluation of the above conditions, the controller may determine that the supporting parts 121, 122 of the head mounted device 100 are fully open and the head mounted device 100 is not being used. Since the head mounted device 100 is in an unused status, the controller may enable the head mounted device 100 to enter a low power state.

In FIG. 2D, based on the supporting parts 121, 122 of the head mounted device 100 overlapping each other and having a relatively short interval distance, the sound signals ASA, ASB at the sound receivers MICB, MICA may have relatively low receive delay, and the sound signals ASA, ASB at the sound receivers MICB, MICA may have relatively high intensity. The controller may accordingly determine that the supporting parts 121, 122 are overlapping each other and the head mounted device 100 is not being used, and may enable the head mounted device 100 to enter a low power state.

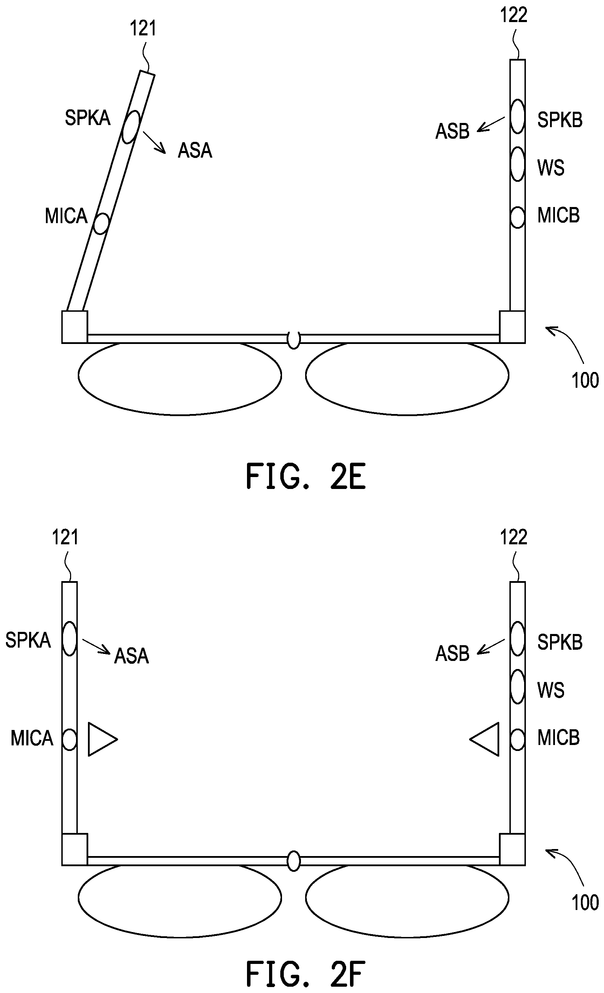

In FIG. 2E, the supporting part 121 of the head mounted device 100 is half-open, and the supporting part 122 is fully open. Under such conditions, the interval distance between the speaker SPKA and the sound receiver MICB may be less than the interval distance between the speaker SPKB and the sound receiver MICA. Therefore, the receive delay of the sound signal ASA received by the sound receiver MICB may be less than the receive delay of the sound signal ASB received by the sound receiver MICA. The controller may determine that the head mounted device 100 is in a semi-closed status based on whether the absolute value of the difference between the receive delay of the sound signal ASA received by the sound receiver MICB and the receive delay of the sound signal ASB received by the sound receiver MICA is too large. Based on the head mounted device 100 not being used in the semi-closed status, the controller may enable the head mounted device 100 to enter a low power state.

The aforementioned delay threshold may be set at approximately 2*10⁻⁴ seconds, and the delay threshold in the fully open status is approximately 4*10⁻⁴ seconds. The method for determining asymmetry of the supporting parts 121, 122 is as follows. The controller compares the two sets of receive delays. The difference must not be greater than 5%, while the minimum delay time must be greater than 90% of the delay time in the fully open status, thereby ensuring that the supporting parts 121, 122 remain in an open status.

In FIG. 2F, when the sound receivers MICA, MICB experience abnormalities and do not receive sound signals ASA, ASB (for example, the sound receivers MICA, MICB are blocked), the receive delays of the sound signals ASA, ASB calculated by the controller may all be similar values. The controller may further calculate respective intensities of the sound signals ASA, ASB at the sound receivers MICB, MICA. Based on the sound receivers MICA, MICB being blocked, the sound signals ASA, ASB at the sound receivers MICB, MICA may have relatively small intensity, and the controller may accordingly determine that the head mounted device 100 is in an abnormal status.

In terms of intensity calculation, the controller may, for example, use the values parsed from 16-bit sound signals with a time unit (such as 200 milliseconds) as the convolution kernel to perform convolution calculation to obtain sound intensity. When the supporting parts 121, 122 are fully open, the intensity and wearing intensity threshold may be set at approximately between 40 and 10 units, and when the supporting parts 121, 122 are closed, the intensity may be above 80 units.

When an abnormal status occurs, the controller may enable the display of the head mounted device 100 to display abnormal information, or inform the user by transmiting warning signals such as visible light, sound, or vibration.

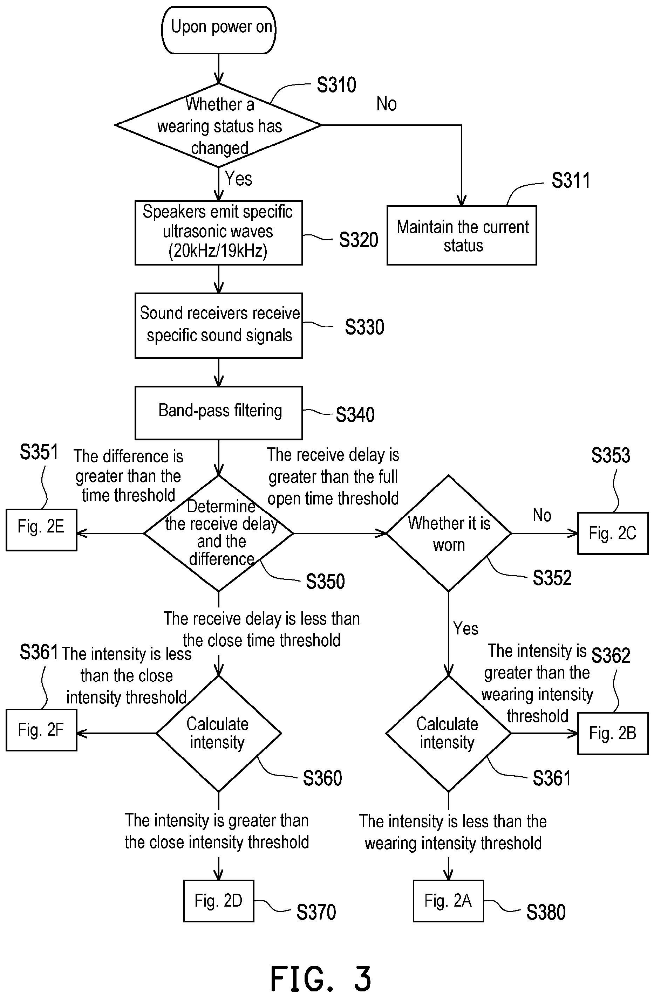

Referring to FIG. 3, FIG. 3 is a working status detection method of a head mounted device according to an embodiment of the disclosure. When the head mounted device is powered on, in step S310, the controller may determine whether the wearing status of the wearable sensor has changed. If not, the current status may be maintained (step S311); if yes, in step S320, the controller may enable two speakers on the supporting parts of the head mounted device to emit specific ultrasonic waves, for example, at frequencies of 20Khz and 19Khz, respectively.

In step S330, the controller may enable two sound receivers on the supporting parts of the head mounted device to respectively receive specific sound signals (ultrasonic waves) emitted by the speakers. In step S340, the sound receivers of the head mounted device may perform band-pass filtering (between 18Khz and 21Khz) on the received sound signals to prevent interference from external environmental sounds (such as vehicle noise, talking, indoor and outdoor environmental sounds, etc.).

In step S350, the controller may calculate the difference between the receive delays of the sound signals received by the sound receivers, and when the difference is greater than a preset time threshold, determine that the head mounted device is in the status of FIG. 2E (step S351). When the controller determines that the receive delays of the sound signals are both less than the close time threshold, the process proceeds to step S360. When the controller determines that the receive delays of the sound signals are both greater than the full open time threshold, the process proceeds to step S352.

In step S360, the controller may calculate respective intensities of the sound signals received by the sound receivers. When the calculated intensities are both less than the close intensity threshold, the controller may determine that the head mounted device is in the status of FIG. 2F (step S361). When the calculated intensities are both greater than the close intensity threshold, the controller may determine that the head mounted device is in the status of FIG. 2D (step S370).

In step S352, the controller may determine whether the head mounted device is being worn according to the wearable sensor. If the determination result is no, the controller may determine that the head mounted device is in the status of FIG. 2C (step S353). If the determination result is yes, the controller may further calculate respective intensities of the sound signals received by the sound receivers, and make a determination regarding the respective intensities of the sound signals (step S361). When the controller determines that the intensities of the sound signals are both greater than the wearing intensity threshold, the controller may determine that the head mounted device is in the status of FIG. 2B (step S362). When the controller determines that the intensities of the sound signals are both less than the wearing intensity threshold, the controller may determine that the head mounted device is in the status of FIG. 2A (step S380).

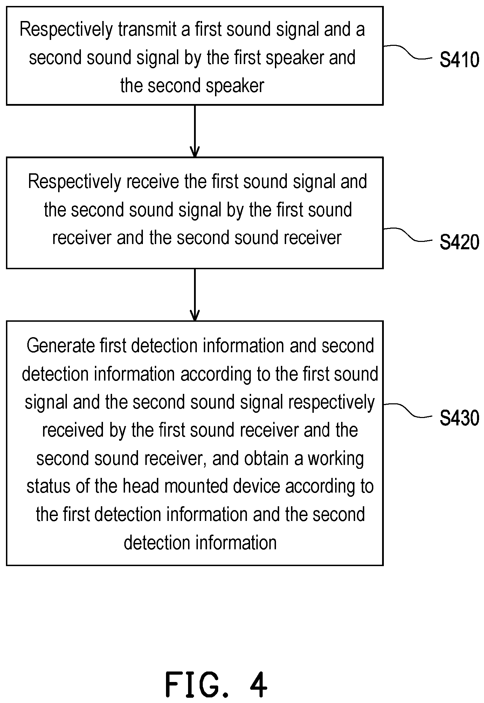

Referring to FIG. 4, FIG. 4 is a working status detection method of a head mounted device according to an embodiment of the disclosure. The head mounted device of this embodiment is as shown in FIG. 1, where the working status detection method includes the following. In step S410, the head mounted device enables a first speaker and a second speaker to respectively transmit a first sound signal and a second sound signal. In step S420, a first sound receiver and a second sound receiver are enabled to respectively receive the first sound signal and the second sound signal. In step S430, first detection information and second detection information are generated according to the first sound signal and the second sound signal respectively received by the first sound receiver and the second sound receiver, and a working status of the head mounted device is obtained according to the first detection information and the second detection information.

Regarding the implementation details of the various steps S410-S430 of this embodiment, detailed descriptions have been provided in the aforementioned embodiments, and will not be repeated here.
In summary, the head mounted device of the disclosure performs its working status detection operation through speakers and sound receivers disposed on the supporting part. Without the need to set additional sensors, the volume required by the head mounted device may be effectively reduced, and production costs may be effectively lowered.

## Claims

1. A head mounted device, comprising:
a main body part;
a first supporting part and a second supporting part, respectively disposed on two opposite sides of the main body part;
a first speaker and a first sound receiver, disposed on the first supporting part;
a second speaker and a second sound receiver, disposed on the second supporting part,
wherein the first speaker and the second speaker respectively transmit a first sound signal and a second sound signal, and the first sound receiver and the second sound receiver respectively receive the first sound signal and the second sound signal; and
a controller, configured to generate a first detection information and a second detection information according to the first sound signal and the second sound signal respectively received by the first sound receiver and the second sound receiver, and obtain a working status of the head mounted device according to the first detection information and the second detection information.

2. The head mounted device according to claim 1, wherein the controller generates the first detection information and the second detection information according to a first receive delay and a second receive delay of the first sound signal and the second sound signal respectively received by the first sound receiver and the second sound receiver.

3. The head mounted device according to claim 2, wherein in response to an absolute value of a difference between the first receive delay and the second receive delay being greater than a preset first time threshold, the controller determines that the head mounted device is in a semi-closed status.

4. The head mounted device according to claim 2, wherein in response to the first receive delay and the second receive delay being both less than a close time threshold, the controller further calculates respective intensities of the first sound signal and the second sound signal.

5. The head mounted device according to claim 4, wherein in response to the respective intensities of the first sound signal and the second sound signal being both greater than a close intensity threshold, the controller determines that the first supporting part and the second supporting part are in an overlapping status.

6. The head mounted device according to claim 4, wherein in response to the respective intensities of the first sound signal and the second sound signal being both less than a close intensity threshold, the head mounted device is in an abnormal status.

7. The head mounted device according to claim 4, further comprising:
a wearable sensor, disposed on the first supporting part or the second supporting part for sensing a wearing status of the head mounted device.

8. The head mounted device according to claim 7, wherein in response to an absolute value of a difference between the first receive delay and the second receive delay being less than a preset second threshold, and the head mounted device being in a not-worn status, the controller determines that the first supporting part and the second supporting part are fully open, and the head mounted device is not being used.

9. The head mounted device according to claim 7, wherein in response to an absolute value of a difference between the first receive delay and the second receive delay being less than a preset second threshold, and the head mounted device being in a worn status, the controller
further calculates the respective intensities of the first sound signal and the second sound signal.

10. The head mounted device according to claim 9, wherein in response to the respective intensities of the first sound signal and the second sound signal being greater than a wearing intensity threshold, the controller determines that the head mounted device is in a handheld status.

11. The head mounted device according to claim 10, wherein in response to the respective intensities of the first sound signal and the second sound signal being less than the wearing intensity threshold, the controller determines that the head mounted device is in a normal use status.

12. A working status detection method for a head mounted device, comprising:
disposing a first supporting part and a second supporting part respectively on two opposite sides of a main body part of the head mounted device;
disposing a first speaker and a first sound receiver on the first supporting part;
disposing a second speaker and a second sound receiver on the second supporting part;
enabling the first speaker and the second speaker to respectively transmit a first sound signal and a second sound signal;
enabling the first sound receiver and the second sound receiver to respectively receive the first sound signal and the second sound signal; and
generating a first detection information and a second detection information according to the first sound signal and the second sound signal respectively received by the first sound receiver and the second sound receiver, and obtaining a working status of the head mounted device according to the first detection information and the second detection information.

13. The working status detection method according to claim 12, further comprising:
generating the first detection information and the second detection information according to a first receive delay and a second receive delay of the first sound signal and the second sound signal respectively received by the first sound receiver and the second sound receiver; and
in response to an absolute value of a difference between the first receive delay and the second receive delay being greater than a preset first threshold, determining that the first supporting part and the second supporting part are in a semi-closed status.

14. The working status detection method according to claim 12, further comprising:
generating the first detection information and the second detection information according to a first receive delay and a second receive delay of the first sound signal and the second sound signal respectively received by the first sound receiver and the second sound receiver;
in response to the first receive delay and the second receive delay being both less than a close time threshold, further calculating respective intensities of the first sound signal and the second sound signal;
in response to the respective intensities of the first sound signal and the second sound signal being both greater than a close intensity threshold, determining that the first supporting part and the second supporting part are in an overlapping status; and
in response to the respective intensities of the first sound signal and the second sound signal being both less than the close intensity threshold, determining that the head mounted device is in an abnormal status; and
further comprising:
disposing a wearable sensor on the first supporting part or the second supporting part for sensing a wearing status of the head mounted device.

15. The working status detection method according to claim 12, further comprising:
generating the first detection information and the second detection information according to a first receive delay and a second receive delay of the first sound signal and the second sound signal respectively received by the first sound receiver and the second sound receiver; and
in response to an absolute value of a difference between the first receive delay and the second receive delay being less than a preset second threshold, and the head mounted device being in a not-worn status, determining that the first supporting part and the second supporting part are fully open, and the head mounted device is not being used; or
in response to an absolute value of a difference between the first receive delay and the second receive delay being less than a preset second threshold, and the head mounted device being in a worn status, further calculating respective intensities of the first sound signal and the second sound signal; in response to the respective intensities of the first sound signal and the second sound signal being greater than a wearing intensity threshold, the controller determines that the head mounted device is in a handheld status; and in response to the respective intensities of the first sound signal and the second sound signal being less than the wearing intensity threshold, determining that the head mounted device is in a normal use status.
